# EUROPEAN PATENT SPECIFICATION

(11) **EP 2 899 938 B1**
(45) Date of publication and mention of the grant of the patent: **16.09.2020**
(21) Application number: 13856661.7
(22) Date of filing: 15.11.2013
(51) Int. Cl.: H04L 29/08, H04L 12/24, H04L 12/801

(54) **SERVICE DOWNLOAD ACCELERATION METHOD AND SYSTEM, SERVICE STATE MAINTENANCE METHOD AND DEVICE**
VERFAHREN UND SYSTEM ZUR BESCHLEUNIGUNG DES HERUNTERLADENS EINES DIENSTES, WARTUNGSVERFAHREN FÜR DIENSTZUSTAND UND VORRICHTUNG
SYSTÈME ET PROCÉDÉ D'ACCÉLÉRATION DE TÉLÉCHARGEMENT DE SERVICE, PROCÉDÉ ET DISPOSITIF DE MAINTENANCE D'ÉTAT DE SERVICE

(30) Priority: 22.11.2012 CN 201210478433
(43) Date of publication of application: 29.07.2015
(73) Proprietor: ZTE Corporation, Shenzhen, Guangdong 518057 (CN)
(72) Inventor: HUANG, Sunliang, Shenzhen Guangdong 518057 (CN); CHEN, Jianye, Shenzhen Guangdong 518057 (CN); WU, Ping, Shenzhen Guangdong 518057 (CN)
(74) Representative: Broderick, Terence
(86) International application number: PCT/CN2013/087251
(87) International publication number: WO 2014/079340

(56) References cited:
- WO-A2-2004/112302
- CN-A- 101 404 585
- CN-A- 102 387 220
- CN-A- 103 001 955
- US-A1- 2004 261 094
- US-A1- 2006 149 845

## Description

### Technical Field

The present invention relates to the communication technology field, and in particular, to a service download acceleration method and system, and a service state maintenance method and apparatus.

### Background of the Related Art

Operators have focused on intelligent pipeline since 2011, and hope to provide better services for users and increase service revenue through effective improvement and integration of network, so as to avoid becoming progressively pipelined and low-valued. Wherein, Bandwidth On Demand (BOD) service is a representative service therein. The BOD service generally allows users to freely select a corresponding service acceleration package through a designated service page, dynamically enhancing the network access bandwidth of users, so as to provide differentiated services.

While the BOD service of the operators only enhances the access segment bandwidth of users at present, and implements guarantee to the access segment bandwidth, but it is shared above the network service control point (BRAS) and is unable to implement end-to-end network guarantee for the users; and the download speed of users and the using experience of application are subject to the far-end server, and the content used by users cannot be guaranteed.

Therefore, the BOD service has not been really applied on a large scale after several years of development, and there is a little number of active users. Its main reason is that the operators can only provide the access segment network bandwidth guarantee and is unable to guarantee the corresponding content and also is unable to guarantee user experience.

The operators are subject to that the application system is unable to guarantee user experience, and meanwhile, content and application providers are unable to control the physical network but can only make corresponding optimization at the application level. For example, some Peer to Peer (P2P) download software is optimized through the P2P node, improving the user download speed by adopting the Peer to Server&Peer (P2SP) technology; a lot of network video service providers also deployed a large number of Content Delivery Network (CDN) systems, but they cannot guarantee user experience either because they are limited by the influence of the network bandwidth and quality.

And the vast majority of contents are distributed by adopting the CDN at present. According to the related art, it is unable to realize effective perception and linkage between the network and the CDN system, and therefore, the network operators and the content/application providers have a large number of problems at present. To sum up, the current network and content still are in a split state, and such split state influences user experience.

Relevant technologies are also known from US 2004/261094 A1 23 December 2004; US 2006/149845 A1 6 July 2006; and WO 2004/112302 A2 23 December 2004.

### Summary of the Invention

The technical problem to be solved by the present invention is to provide a service download acceleration method and system as defined in the attached independent claims which can realize effective perception and linkage between the network and the CDN system and improve user service experience.

Also provided is a service download acceleration method, comprising:
a content delivery network (CDN) system transmitting a network acceleration and/or quality assurance policy request of a user to a network service control device according to a maintained service state of the user;
when receiving the network acceleration and/or quality assurance policy request of the user, the network service control device applying to a policy control system for a corresponding network acceleration and/or quality assurance policy; and
the policy control system issuing the network acceleration and/or quality assurance policy for the user to the network service control device.

Preferably, the CDN system maintains the following service states of the user:
an on state; a normal download state; a content acceleration download state; a network acceleration download state; a content and network joint acceleration download state; and an off state.

Preferably, the CDN system, according to the maintained service state of the user, transmits the network acceleration and/or quality assurance policy request to the network service control device when the service state of the user is the normal download state, or is the content acceleration download state.

Preferably, an interface is set between the CDN system and the network service control device, a protocol of the interface adopts one of the following protocols: a Diameter protocol, a COPS protocol, or a proprietary protocol.

Preferably, the method further comprises:
the CDN system further transmitting the network acceleration and/or quality assurance policy request to the network service control device according to current resource usage of the user.

Preferably, the method further comprises:
after the user service download is completed, the CDN system transmitting a network acceleration and/or quality assurance policy cancellation request of the user to the network service control device according to a received user download completion message;
when receiving the network acceleration and/or quality assurance policy cancellation request, the network service control device requesting the policy control system to cancel the network acceleration and/or quality assurance policy of the user; and
the policy control system issuing a network acceleration and/or quality assurance policy cancellation instruction to the network service control device.

Also provided is a service state maintenance method, wherein a content delivery network (CDN) system maintains a service state of a user, comprising:
after the user selects an acceleration download service, the service state of the user entering an on state;
after a download link is established successfully when the user is in the on state, the service state of the user entering a normal download state;
after the user requests content acceleration successfully in the normal download state, the service state of the user entering a content acceleration download state; and
after the user requests network acceleration and/or quality assurance successfully in the content acceleration download state, the service state of the user entering a content and network joint acceleration download state.

Preferably, the method further comprises:
after the user requests network acceleration and/or quality assurance successfully in the normal download state, the service state of the user entering a network acceleration download state; and
after the user requests content acceleration successfully in the network acceleration download state, the service state of the user entering the content and network joint acceleration download state.

Preferably, the method further comprises:
after the download link is established unsuccessfully and a limited number of times is exceeded when the user is in the on state, the service state of the user entering an off state;
or, after the service download is completed or a link is interrupted when the user is in the normal download state, the service state of the user entering the off state;
or, after the link is interrupted or the service download is completed and cancellation of a relevant policy is completed when the user is in the content acceleration download state or the network acceleration download state, the service state of the user entering the off state;
or, after the link is interrupted or the service download is completed and a policy cancellation completion feedback message is received when the user is in the content and network joint acceleration download state, the service state of the user entering the off state.

Also provided is a service download acceleration system, the system comprising a service state maintenance module and a service acceleration request module in a content delivery network (CDN) system, and a policy application and execution module in a network service control device; wherein,
the service state maintenance module is configured to: maintain a service state of a user;
the service acceleration request module is configured to: transmit a network acceleration and/or quality assurance policy request of the user to the network service control device according to a service state of the user maintained by the service state maintenance module;
the policy application and execution module is configured to: when receiving the network acceleration and/or quality assurance policy request of the user, apply to a policy control system for a corresponding network acceleration and/or quality assurance policy, and execute the network acceleration and/or quality assurance policy for the user issued by the policy control system.

Preferably, the service state maintenance module is configured to: maintain the following service states of the user: an on state; a normal download state; a content acceleration download state; a network acceleration download state; a content and network joint acceleration download state; and an off state;
the service acceleration request module is configured to: transmit the network acceleration and/or quality assurance policy request to the network service control device when the service state of the user is the normal download state or is the content acceleration download state, according to the service state of the user maintained by the service state maintenance module.

Preferably, the service acceleration request module is configured to: transmit the network acceleration and/or quality assurance policy request to the network service control device through a Diameter protocol interface, a COPS protocol interface, or a proprietary protocol interface.

Preferably, the service acceleration request module is further configured to: after the user service download is completed, transmit a network acceleration and/or quality assurance policy cancellation request of the user to the network service control device according to a received user download completion message;
the policy application and execution module is further configured to: when receiving the network acceleration and/or quality assurance policy cancellation request, request the policy control system to cancel the network acceleration and/or quality assurance policy of the user, and execute a network acceleration and/or quality assurance policy cancellation instruction issued by the policy control system.

Also provided is a service state maintenance apparatus, applied in a content delivery network (CDN) system, comprising:
a service state maintenance module, configured to: maintain the following service states of a user: an on state; a normal download state; a content acceleration download state; a network acceleration download state; a content and network joint acceleration download state; and an off state; and
a service state conversion processing module, configured to: perform conversion processing on the service state of the user.

Preferably, the service state conversion processing module is configured to: perform the following conversion processing on the service state of the user:
after the user selects an acceleration download service, the service state of the user entering the on state;
after a download link is established successfully when the user is in the on state, the service state of the user entering the normal download state;
after the user requests content acceleration successfully in the normal download state, the service state of the user entering the content acceleration download state; and
after the user requests network acceleration and/or quality assurance successfully in the content acceleration download state, the service state of the user entering the content and network joint acceleration download state.

Preferably, the service state conversion processing module is further configured to: perform the following conversion processing on the service state of the user:
after the user requests network acceleration and/or quality assurance successfully in the normal download state, the service state of the user entering the network acceleration download state; and
after the user requests content acceleration successfully in the network acceleration download state, the service state of the user entering the content and network joint acceleration download state.

Preferably, the service state conversion processing module is further configured to:
perform the following conversion processing on the service state of the user:
after the download link is established unsuccessfully and a limited number of times is exceeded when the user is in the on state, the service state of the user entering the off state;
after the service download is completed or a link is interrupted when the user is in the normal download state, the service state of the user entering the off state;
after the link is interrupted or the service download is completed and cancellation of a relevant policy is completed when the user is in the content acceleration download state or the network acceleration download state, the service state of the user entering the off state;
after the link is interrupted or the service download is completed and a policy cancellation completion feedback message is received when the user is in the content and network joint acceleration download state, the service state of the user entering the off state.

The service download acceleration method and system provided by the embodiments of the present invention realize the linkage between the CDN system and the network, and can implement the targeted network acceleration policy and content acceleration policy for specific users and specific application content within a specific time period; in addition, it can also trigger policy request, implementation and cancellation according to the application content use state of user. By adopting the present invention, it can effectively improve the service providing and guarantee capabilities of the system and significantly improve user service experience.

### Brief Description of Drawings

The accompanying drawings described herein are used to provide further understanding for the present invention and constitute a part of the present application. The illustrative embodiments of the present invention and the description thereof are used to explain the present invention, but do not constitute inappropriate limitations to the present invention. Wherein:
FIG. 1 is a flow chart of a service download acceleration method in one embodiment of the present invention;
FIG. 2 is a schematic diagram of a service state maintenance method of a CDN in one embodiment of the present invention;
FIG. 3 is a schematic diagram of the composition of a service download acceleration system in one embodiment of the present invention;
FIG. 4 is a schematic diagram of the composition of a service state maintenance apparatus in one embodiment of the present invention.

### Preferred Embodiments of the Present Invention

This embodiment provides a method for realizing service download acceleration, adopting the following technical scheme:
a CDN system transmits a network acceleration and/or quality assurance policy request of a user to a network service control device according to a maintained service state of the user;
when receiving the network acceleration and/or quality assurance policy request of the user, the network service control device applies to a policy control system for a corresponding network acceleration and/or quality assurance policy; and
the policy control system issues the network acceleration and/or quality assurance policy for the user to the network service control device.

Further, the CDN system further transmits the network acceleration and/or quality assurance policy request to the network service control device according to current resource usage of the user.

Further, the CDN system maintains the service state of the user, specifically including:
an on state, an off state, a normal download state; a content acceleration download state; a network acceleration download state; a content and network joint acceleration download state, etc.

Further, after the user service download is completed, the CDN system requests the network service control device to cancel the network acceleration and/or quality assurance policy according to the change of the service state of the user;
the network service control device requests the policy control system to cancel the network acceleration and/or quality assurance policy of the user, and feeds back the execution result to the CDN system.

Further, the above-mentioned scheme specifically can include the following contents:
(a) a user state machine is added in the CDN system, to manage the link state and the network upload/download state of the user;
(b) the CDN system is added with an interface (which can adopt the Diameter, COPS, proprietary interface, etc.) between it and the network service control device; the CDN system can, based on the user state information maintained by itself, trigger to transmit a corresponding network acceleration and/or quality assurance policy request to the network service control device according to the change of the application state of the user, and meanwhile can also execute or cancel a corresponding content acceleration policy according to the application state of the user;
(c) when the user visits an application service, it is redirected to the CDN system; when the user selects acceleration download or video acceleration, the CDN system maintains the user state, performing CDN content acceleration according to the user state and meanwhile triggering to transmit a network acceleration and/or quality assurance request to the network service control device according to the user state;
(d) the network service control device is added with an interface (which can adopt the Diameter, the COPS, the proprietary interface, etc.) between it and the CDN system; and it corresponds to the user within the present system according to the request message of the CDN system, to check the corresponding state, and applies to the policy control system for a network acceleration and/or quality assurance policy based on the user;
(e) the policy control system issues the network acceleration and/or quality assurance policy for the user to a network device;
(f) after the user service download is completed, the CDN system is triggered to request the network service control device to cancel the network acceleration and/or quality assurance policy according to the completion state of the user; and in the CDN system the content acceleration policy to the user is also cancelled at the same time;
(g) the network service control device, according to the request of the CDN system, requests the policy control system to cancel the network acceleration and/or quality assurance policy of the user; and feeds back the execution result to the CDN system;
(h) the CDN system shuts down the user state machine, and releases relevant resources.

In addition, the above-mentioned method can have the following characteristics: the CDN system is added with an interface between it and the network service control device, which can interact with the network service control device, enabling linkage mechanism between the CDN system and the network.

In addition, the above-mentioned method can have the following characteristics: the CDN system is added with a user state machine, maintaining the service state and the service state of the user, etc., so that the CDN system can apply to the network for network acceleration and/or network quality assurance based on the user, for specific users and specific content within a specific time period, which help to improve user experience.

In addition, the above-mentioned method can have the following characteristics: in combination with the content acceleration and network acceleration based on the specific user and the user state machine, the effective combination and linkage of the content acceleration and network acceleration based on the user can be realized, and the joint acceleration of the content and the network is realized.

In addition, the above-mentioned method can have the following characteristics: based on the user state machine of the CDN, the high grade user and the normal user can be distinguished, and differentiated services can be implemented based on different users in terms of the content acceleration, the network acceleration and/or quality assurance policy.

In addition, the above-mentioned method can have the following characteristics: the CDN system can trigger a corresponding policy request according to the resource usage of the user, the opening and completion states of downloading, the link state of the user, etc., to obtain the new policy information or recover the service policy of the user, which is a method triggered on the basis of the user service/content usage; for example: in the above-mentioned content (f), when the user download is completed, the CDN system triggers a policy change request according to the state of the user when the download is completed.

The implementation of the technical scheme of the present invention is further described in detail with reference to the accompanying drawings and the embodiments as below. It should be noted that, in the case of not conflicting, the embodiments in the present application and the features in these embodiments can be arbitrarily combined with each other.

The service download acceleration method of the embodiment of the present invention is expounded in combination with the accompanying drawings as below.

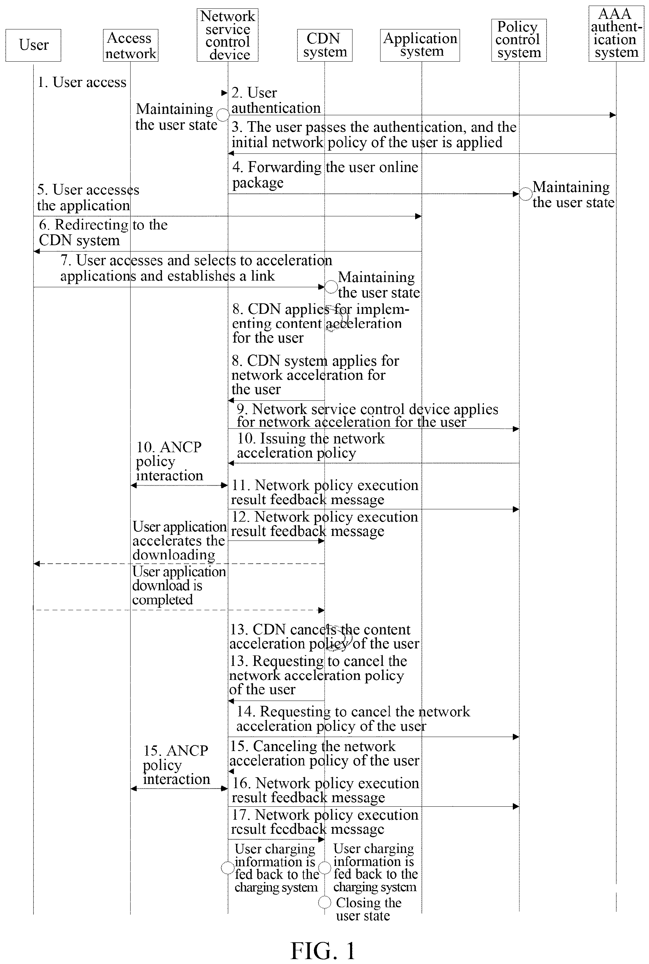

FIG. 1 describes the processing flow of the service download acceleration method of the embodiment of the present invention. In the present embodiment, the involved system mainly includes several following parts: a user terminal, an access network, a network service control device (such as: BRAS), a CDN system, an application system (such as, web application, video application), a policy control system, and an AAA authentication system.

As shown in FIG. 1, the service implementation steps in the present embodiment are described in detail as follows.
Step 1, the user accesses the network, and initiates a network access request.
Step 2, the network service control device receives the network access request of the user, maintains the user state, and initiates a user access request to the AAA authentication system.
Step 3, the AAA authentication system performs authentication for the user and, if the authentication is passed, sends a user authentication passing message and the corresponding initial network policy of user to the network service control device.
Step 4, the network service control device receives the authentication passing message, and distributes the corresponding IP address for the user and applies the corresponding network policy; and it sends a user online charging package to the AAA authentication system, to notify the AAA system that the user has begun to use network service and the charging begun.
   In that step, in order to maintain the online state and the policy information of the user in the policy control system, the network service control device further sends the same information to the policy control system at the same time when sending the online package to the AAA system; after receiving the user online information, the policy control system maintains the online state of the user and the current network policy state of the user (through this mode, the policy control system also obtains the corresponding relation between the IP address of the user and the address of the network service control device to which the user belongs).
Step 5, the user visits the corresponding application system.
Step 6, the user is redirected to the corresponding CDN system.
Step 7, the user visits the corresponding application, and the CDN system establishes a state machine for the user and maintains the user state.
Step 8, the CDN system applies for a content acceleration service for the user.
   Further, the specific content acceleration mode can be determined according to the specific implementation of the CDN system, and there may be different schemes with respect to different link modes or download modes, for example, the download mode may be Http, FTP, P2SP, etc.
   Preferably, considering that the technical advantages of the CDN and the P2SP can be combined to provide the acceleration of content, through the combination of the CDN and the P2P, it can make the content source more controllable and more reliable, and the characteristics of the P2SP further can be used to realize the multipoint-to-point transmission and realize the transmission from multiple content sources to the user, which fully guarantees the reliability of the user content source and can promote the download speed of the user.
   Meanwhile, the similar grading services can also be provided, to provide more and better content source nodes and provide higher download speed for high grade users; when providing the content acceleration, in order to ensure the speed and quality of the network transmission, the CDN system initiates to a network acceleration and/or quality assurance request for the user to the network service control device; this CDN system needs to be added with an interface (the interface protocol can adopt the Diameter, COPS, proprietary protocol, etc.) between it and the network service control device.
Step 9, the network service control device receives the network acceleration (and/or quality assurance policy) request based on the user sent by the CDN, and checks the user state; if it cannot be checked, then an error processing is performed; if the user state is correct, then it applies to the policy control system for the network acceleration policy (and/or quality assurance policy) for the user based on the user.
Step 10, the policy control system receives the network acceleration request, checks the online state and policy information of the user, and issues the network acceleration policy (and/or the quality assurance policy) for the user to the network service control device.
Specifically, for the access network, there are two cases: one is that the access network performs rate limitation for the user line, and such case needs the network service control device to promote the access bandwidth of the user through the ANCP protocol; and the other is that the access network does not perform rate limitation for the user, and such case only needs to rely on the QoS assurance policy deployed by the access network.
Step 11, the network service control device feeds back the execution success or failure message to the policy control system according to the execution result of the network policy.
Step 12, the network service control device feeds back the execution success or failure message to the CDN system according to the execution result of the network policy, such that the CDN system can obtain the result of the network acceleration policy request, so as to determine the migration of the user state in the CDN system.
So far, the user can achieve the joint acceleration of the content and the network, and the user uses an application to download. After the downloading is completed, the CDN system will obtain the user download completion message.
Step 13, the user download completion message will trigger the CDN system to cancel the content acceleration policy to the user and release the corresponding CDN system resources, and meanwhile will also trigger the CDN system to transmit a request for canceling the network acceleration (and/or the quality assurance policy) of the user to the network service control device.
Step 14, the network service control device receives the request for canceling the network acceleration (and/or the quality assurance policy) based on the user, and checks the user state; if there is an error, then the error processing is performed; if the user state is correct, then it requests the policy control system to cancel the network acceleration (and/or the quality assurance policy) policy of the user based on the user.
Step 15, the policy control system receives a message for canceling the network acceleration (and/or the quality assurance policy), checks the online state and the policy state of the user, and issues an instruction to the network service control device to cancel the network acceleration (and/or the quality assurance policy) policy; the policy cancellation of the access network is completed by the network service control device through the ANCP.
Step 16, the network service control device feeds back to the policy control system according to the result of the policy execution.
Step 17, the network service control device feeds back to the CDN system according to the result of the policy execution; and after the CDN system cancels the network acceleration (and/or the quality assurance policy), the user enters an off state, and the corresponding resources are released.

For charging, the corresponding charging records can be generated by the CDN system according to the user state, the online situation, the downloaded content, the downloading time, the downloaded flow rate, etc., and can be transmitted to the charging system through the corresponding northbound interface. The network service control device can also record the corresponding user charging information as required to feed back to the charging system.

In the overall system, the corresponding user state is maintained in all of the network service control device, the policy control system and the CDN system, and a unique identifier is required to correlate the users, and the source IP addresses and the source port numbers of the users can be adopted.

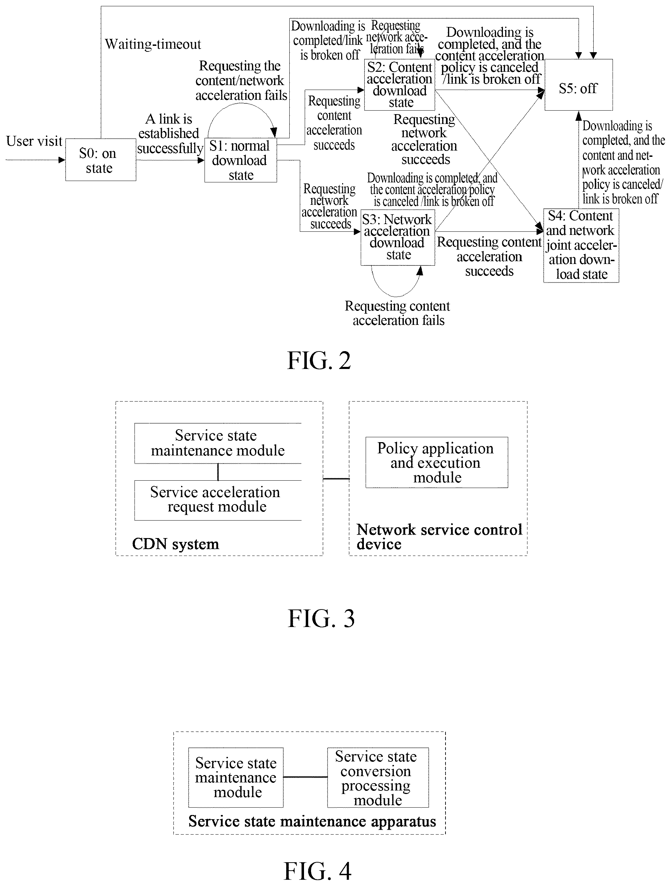

The abnormal thread breakage detection of the user link can use the network service control device and the respective detection mechanisms at the CDN service level; in the abnormal thread breakage processing, the original mechanism can be used in the network service control device; in the CDN system, it is needed to consider the combination with the user state machine on the basis of the original processing, and the specific cooperation and processing can be seen in FIG. 2.

The characteristics of the above-mentioned method is that the CDN system triggers a network acceleration and/or policy assurance request to the network service control device, with fewer overall changes to the network; meanwhile, because of the participation of the CDN system, it can realize the joint acceleration of the content and the network, and it can realize targeted implementation of the content and network acceleration and quality assurance within a specific time period and based on specific users and specific content, effectively improving user service experience.

FIG. 2 describes the flow chart of maintaining the user service state in the CDN system according to the embodiment of the present invention, for example, a user state machine can be added in the CDN system to maintain the service state of the user.

As shown in FIG. 2, the service state maintenance method of the present embodiment mainly includes the following contents.

After the user selects an acceleration download service, the CDN system establishes a state machine for the user, and the user enters S0 state (on state).

In S0 state, the user tries to establish a download link and then enters the S1 state (normal download state) if the download link is established successfully, and tries the corresponding waiting and re-linking mechanism if it is not established successfully; and if repeating the link is unsuccessful and the corresponding limit is exceeded, then the user enters the S5 state (off state), and the corresponding resources are released.

The user can try to request content acceleration in the S1 state (the normal download state); the user requests the content acceleration service in the CDN system, and the CDN system determines whether to accept the acceleration request of the user or not according to its own resource situation; and the CDN accepts the content acceleration request of the user and performs the content acceleration for the user in the case that the resources permit and at this moment the user enters the S2 state (the content acceleration download state); if the CDN system resources are insufficient, the acceleration request of the user cannot be accepted, and the content acceleration request of the user fails, then the user is maintained in the S1 state (the normal download state); the corresponding timing and waiting mechanism can be started at this moment, and the content acceleration request is re-initiated after a certain interval.

The user can also try to request the network acceleration (and/or the quality assurance) in the S1 state (the normal download state); the user can trigger the CDN system to send a network acceleration (and/or quality assurance policy) request to the network service control device in this state, requesting the network to perform bandwidth improvement and network quality assurance for the user; the network service control device returns success information, and then the user enters the S3 state (the network acceleration download state); if the network service control device returns a failure message, then the user is maintained in the S1 state (the normal download state); the corresponding timing and waiting mechanism can be started at this moment, and the network acceleration and/or assurance policy request is re-initiated after a certain interval.

The user completes downloading application in the S1 state (the normal download state), and then the user directly enters the S5 state (the off state), and the corresponding resources are released.

The user is in the S1 state (the normal download state), and if the download link is broken off (in the case that the system judges that the effective link of the user is lost and the service is interrupted), the user directly enters the S5 state (the off state), and the corresponding resources are released.

The user can request the network acceleration (and/or the quality assurance) in the S2 state (the content acceleration download state), and triggers the CDN system to send a network acceleration (and/or quality assurance policy) request to the network service control device, requesting the network to perform bandwidth improvement and network quality assurance for the user; the network service control device returns the success information, and then the user enters the S4 state (the content and network acceleration download state); if the network service control device returns the failure message, then the user is maintained in the S2 state (the content acceleration download state); the corresponding timing and waiting mechanism can be started at this moment, and the network acceleration (and/or quality assurance) request is re-initiated after a certain interval.

The user completes downloading application in the S2 state (the content acceleration download state), then the CDN system is triggered to cancel the content acceleration policy for the user, and then the user enters the S5 state (the off state), and the corresponding resources are released.

The user is in the S2 state (the content acceleration download state), and if the download link is broken off (in the case that the system judges that the effective link of the user is lost and the service is interrupted), then the CDN system is triggered to cancel the content acceleration policy for the user, and then the user directly enters the S5 state (the off state), and the corresponding resources are released.

The user can request the content acceleration in the S3 state (the network acceleration download state), and requests the content acceleration service in the CDN system, and the CDN system determines whether to accept the content acceleration request of the user or not according to its own resource situation; and the CDN system accepts the content acceleration request of the user in the case that the resources permit and the user enters the S4 state (the content and network joint acceleration download state); if the CDN system resources are insufficient, the acceleration request of the user cannot be accepted, and the content acceleration request of the user fails, and then the user is maintained in the S3 state (the network acceleration download state).

The user completes downloading application in the S3 state (the network acceleration download state), and then the CDN system is triggered to transmit the message for canceling the acceleration download to the network service control device; the network service control device applies to the policy control system for canceling the network acceleration (and/or quality assurance) policy of the user, and the policy control system issues a control policy to the network service control device after receiving the request, to cancel the network acceleration (and/or quality assurance) policy; after the policy is executed successfully, the network service control device feeds back the execution result to the CDN system. After the CDN system completes cancellation of the network acceleration (and/or quality assurance) policy, the user enters the S5 state (the off state), and the corresponding resources are released.

The user is in the S3 state (the network acceleration download state), and if the download link is broken off (in the case that the system judges that the effective link of the user is lost and the service is interrupted), then the CDN system is triggered to transmit the message for canceling the acceleration download to the network service control device. After the CDN system completes cancellation of the network acceleration (and/or quality assurance) policy, then the user enters the S5 state (the off state), and the corresponding resources are released.

The user completes downloading application in the S4 state (the content and network joint acceleration download state), and then the CDN system is triggered to cancel the content acceleration policy for the user and meanwhile the CDN system is also trigged to transmit the message for canceling the network acceleration (and/or quality assurance) policy to the network service control device to cancel the network acceleration (and/or quality assurance) policy. After the CDN system completes cancellation of the content and network acceleration (and/or quality assurance) policy, the user enters the S5 state (the off state), and the corresponding resources are released.

The user is in the S4 state (the content and network joint acceleration download state), and if the download link is broken off (in the case that the system judges that the effective link of the user is lost and the service is interrupted), then the CDN system is triggered to cancel the content acceleration policy for the user and meanwhile the CDN system is also triggered to transmit the message for canceling the network acceleration (and/or quality assurance) policy to the network service control device to cancel the network acceleration (and/or quality assurance) policy; after the CDN system completes cancellation of the content and network acceleration (and/or quality assurance) policy, the user enters the S5 state (the off state), and the corresponding resources are released.

Furthermore, as shown in FIG. 3, the embodiment of the present invention further provides a service download acceleration system, the system including a service state maintenance module and a service acceleration request module in a CDN system, and a policy application and execution module in a network service control device; wherein,
the service state maintenance module is used to maintain a service state of a user;
the service acceleration request module is used to transmit a network acceleration and/or quality assurance policy request of the user to the network service control device according to a service state of the user maintained by the service state maintenance module;
the policy application and execution module is used to apply to a policy control system for a corresponding network acceleration and/or quality assurance policy, and execute the network acceleration and/or quality assurance policy for the user issued by the policy control system, when receiving the network acceleration and/or quality assurance policy request of the user,.

Furthermore, the service state maintenance module is used to maintain the following service states of the user: an on state; a normal download state; a content acceleration download state; a network acceleration download state; a content and network joint acceleration download state; and an off state;
the service acceleration request module is used to transmit the network acceleration and/or quality assurance policy request to the network service control device when the service state of the user is the normal download state or is the content acceleration download state, according to the service state of the user maintained by the service state maintenance module.

Further, the service acceleration request module is used to transmit the network acceleration and/or quality assurance policy request to the network service control device through a Diameter protocol interface, a COPS protocol interface, or a proprietary protocol interface.

Further, the service acceleration request module is further used to transmit a network acceleration and/or quality assurance policy cancellation request of the user to the network service control device according to a received user download completion message, after the user service download is completed;
the policy application and execution module is further used to request the policy control system to cancel the network acceleration and/or quality assurance policy of the user, and execute a network acceleration and/or quality assurance policy cancellation instruction issued by the policy control system, when receiving the network acceleration and/or quality assurance policy cancellation request.

Furthermore, as shown in FIG. 4, the present invention further provides a service state maintenance apparatus, applied in the CDN system, the apparatus including:
a service state maintenance module for maintaining the following service states of a user: an on state; a normal download state; a content acceleration download state; a network acceleration download state; a content and network joint acceleration download state; and an off state; and
a service state conversion processing module for performing conversion processing on the service state of the user.

Further, the service state conversion processing module is used to perform the following conversion processing on the service state of the user:
after the user selects an acceleration download service, the service state of the user entering an on state;
after a download link is established successfully when the user is in the on state, the service state of the user entering a normal download state;
after the user requests content acceleration successfully in the normal download state, the service state of the user entering a content acceleration download state; and
after the user requests network acceleration and/or quality assurance successfully in the content acceleration download state, the service state of the user entering a content and network joint acceleration download state.

Further, the service state conversion processing module is further used to perform the following conversion processing on the service state of the user:
after the user requests network acceleration and/or quality assurance successfully in the normal download state, the service state of the user entering a network acceleration download state; and
after the user requests content acceleration successfully in the network acceleration download state, the service state of the user entering a content and network joint acceleration download state.

Further, the service state conversion processing module is further used to perform the following conversion processing on the service state of the user:
after the download link is established unsuccessfully and a limited number of times is exceeded when the user is in the on state, the service state of the user entering an off state;
after the service download is completed or a link is interrupted when the user is in the normal download state, the service state of the user entering an off state;
after the link is interrupted or the service download is completed and cancellation of a relevant policy is completed when the user is in the content acceleration download state or the network acceleration download state, the service state of the user entering an off state;
after the link is interrupted or the service download is completed and a policy cancellation completion feedback message is received when the user is in the content and network joint acceleration download state, the service state of the user entering an off state.

The above is only the preferred embodiments of the present invention and is not intended to limit the present invention. Obviously, a person skilled in the art shall appreciate that the foregoing respective modules or respective steps of the present invention can be implemented by a universal computing device, and they can be integrated in a single computing device, or distributed in a network composed of a plurality of computing devices. Alternatively, they can be implemented by executable program codes of the computing device. Accordingly, they can be stored in a storage device and implemented by a computing device, and in some cases, the illustrated or described steps can be executed in a sequence different from the sequence here, or they are made into various integrated circuit modules respectively, or a plurality of modules or steps therein are made into a single integrated circuit module to be implemented. So, the present invention is not limited to any specific combination of hardware and software.

### Industrial Applicability

In summary, the embodiments of the present invention fully integrate the policy control system, the CDN system, the network service control device and the application system, and innovatively add the content state machine of the user and the policy interaction interface between the CDN system and the network service control device in the CDN system, realizing the policy request and change based on the user, so that the overall system can realize the content and network joint acceleration triggered on the basis of the user service state, for specific users and specific contents within a specific time period. It meets the high requirement of the user on the aspects of network bandwidth, network quality and content transmission rate, etc., in the application scenes such as the file downloading and the video watching, and effectively solves the problem that the simple network access bandwidth promotion in the current BOD mode cannot guarantee the content and the optimization of the application layer is subject to the network bandwidth and the network quality. The method and system provided based on the embodiments of the present invention can effectively improve user service experience.

## Claims

1. A service download acceleration method, wherein,
a content delivery network, CDN, system transmitting a network acceleration and/or quality assurance policy request of a user to a network service control device according to a maintained service state of the user and current resource usage of the user;
when receiving the network acceleration and/or quality assurance policy request of the user, the network service control device applying to a policy control system for a corresponding network acceleration and/or quality assurance policy; and
the policy control system issuing the network acceleration and/or quality assurance policy for the user to the network service control device; wherein,
the CDN system maintains the following service states of the user:
an on state; a normal download state; a content acceleration download state; a network acceleration download state; a content and network joint acceleration download state; and an off state; wherein,
the CDN system, according to the maintained service state of the user, transmits the network acceleration and/or quality assurance policy request to the network service control device when the service state of the user is the normal download state, or is the content acceleration download state.

2. The method according to claim 1, wherein,
an interface is set between the CDN system and the network service control device, a protocol of the interface adopts one of the following protocols: a Diameter protocol, a COPS protocol, or a proprietary protocol.

3. The method according to claim 2, further comprising:
after the user service download is completed, the CDN system transmitting a network acceleration and/or quality assurance policy cancellation request of the user to the network service control device according to a received user download completion message;
when receiving the network acceleration and/or quality assurance policy cancellation request, the network service control device requesting the policy control system to cancel the network acceleration and/or quality assurance policy of the user; and
the policy control system issuing a network acceleration and/or quality assurance policy cancellation instruction to the network service control device.

4. The method according to claim 1, wherein, a content delivery network (CDN) system maintains a service state of a user, comprising:
after the user selects an acceleration download service, the service state of the user entering an on state;
after a download link is established successfully when the user is in the on state, the service state of the user entering a normal download state;
after the user requests content acceleration successfully in the normal download state, the service state of the user entering a content acceleration download state; and
after the user requests network acceleration and/or quality assurance successfully in the content acceleration download state, the service state of the user entering a content and network joint acceleration download state.

5. The method according to claim 4, further comprising:
after the user requests network acceleration and/or quality assurance successfully in the normal download state, the service state of the user entering a network acceleration download state; and
after the user requests content acceleration successfully in the network acceleration download state, the service state of the user entering the content and network joint acceleration download state.

6. The method according to claim 4, further comprising:
after the download link is established unsuccessfully and a limited number of times is exceeded when the user is in the on state, the service state of the user entering an off state;
or, after the service download is completed or a link is interrupted when the user is in the normal download state, the service state of the user entering the off state;
or, after the link is interrupted or the service download is completed and cancellation of a relevant policy is completed when the user is in the content acceleration download state or the network acceleration download state, the service state of the user entering the off state;
or, after the link is interrupted or the service download is completed and a policy cancellation completion feedback message is received when the user is in the content and network joint acceleration download state, the service state of the user entering the off state.

7. A service download acceleration system, comprising a service state maintenance module and a service acceleration request module in a content delivery network ,CDN, system, and a policy application and execution module in a network service control device; wherein,
the service state maintenance module is configured to: maintain a service state of a user;
the service acceleration request module is configured to: transmit a network acceleration and/or quality assurance policy request of the user to the network service control device according to a service state of the user maintained by the service state maintenance module and current resource usage of the user;
the policy application and execution module is configured to: when receiving the network acceleration and/or quality assurance policy request of the user, apply to a policy control system for a corresponding network acceleration and/or quality assurance policy, and execute the network acceleration and/or quality assurance policy for the user issued by the policy control system; wherein,
the service state maintenance module is configured to: maintain the following service states of the user: an on state; a normal download state; a content acceleration download state; a network acceleration download state; a content and network joint acceleration download state; and an off state;
the service acceleration request module is configured to: transmit the network acceleration and/or quality assurance policy request to the network service control device when the service state of the user is the normal download state or is the content acceleration download state, according to the service state of the user maintained by the service state maintenance module.

8. The system according to claim 7, wherein,
the service acceleration request module is configured to: transmit the network acceleration and/or quality assurance policy request to the network service control device through a Diameter protocol interface, a COPS protocol interface, or a proprietary protocol interface.

9. The system according to claim 7, wherein,
the service acceleration request module is further configured to: after the user service download is completed, transmit a network acceleration and/or quality assurance policy cancellation request of the user to the network service control device according to a received user download completion message;
the policy application and execution module is further configured to: when receiving the network acceleration and/or quality assurance policy cancellation request, request the policy control system to cancel the network acceleration and/or quality assurance policy of the user, and execute a network acceleration and/or quality assurance policy cancellation instruction issued by the policy control system.

10. The system according to claim 7, wherein, the service state maintenance module maintains a service state of a user, comprising:
after the user selects an acceleration download service, the service state of the user entering an on state;
after a download link is established successfully when the user is in the on state, the service state of the user entering a normal download state;
after the user requests content acceleration successfully in the normal download state, the service state of the user entering a content acceleration download state; and
after the user requests network acceleration and/or quality assurance successfully in the content acceleration download state, the service state of the user entering a content and network joint acceleration download state.

11. The system according to claim 10, further comprising:
after the user requests network acceleration and/or quality assurance successfully in the normal download state, the service state of the user entering a network acceleration download state; and
after the user requests content acceleration successfully in the network acceleration download state, the service state of the user entering the content and network joint acceleration download state.

12. The system according to claim 10, further comprising:
after the download link is established unsuccessfully and a limited number of times is exceeded when the user is in the on state, the service state of the user entering an off state;
or, after the service download is completed or a link is interrupted when the user is in the normal download state, the service state of the user entering the off state;
or, after the link is interrupted or the service download is completed and cancellation of a relevant policy is completed when the user is in the content acceleration download state or the network acceleration download state, the service state of the user entering the off state;
or, after the link is interrupted or the service download is completed and a policy cancellation completion feedback message is received when the user is in the content and network joint acceleration download state, the service state of the user entering the off state.

## Patentansprüche

1. Verfahren zur Beschleunigung des Herunterladens eines Dienstes, wobei
ein Inhaltslieferungsnetzwerk-, CND,system eine Netzwerkbeschleunigungs- und/oder Qualitätssicherungsrichtlinienanforderung eines Benutzers an eine Netzwerkdienststeuervorrichtung gemäß einem gewarteten Dienstzustand des Benutzers und der aktuellen Ressourcennutzung des Benutzers überträgt;
beim Empfang der Netzwerkbeschleunigungs- und/oder Qualitätssicherungsrichtlinienanforderung des Benutzers die Netzwerkdienststeuervorrichtung auf ein Richtliniensteuersystem eine entsprechende Netzwerkbeschleunigungs- und/oder Qualitätssicherungsrichtlinie anwendet; und
das Richtliniensteuersystem die Netzwerkbeschleunigungs- und/oder Qualitätssicherungsrichtlinie für den Benutzer an die Netzwerkdienststeuervorrichtung ausgibt; wobei
das CDN-System die folgenden Dienstzustände des Benutzers wartet:
einen Ein-Zustand; einen normalen Herunterladezustand; einen Inhaltsbeschleunigungs-Herunterladezustand; einen Netzwerkbeschleunigungs-Herunterladezustand; einen gemeinsamen Inhalts- und Netzwerkbeschleunigungs-Herunterladezustand; und einen Aus-Zustand; wobei
das CDN-System gemäß dem gewarteten Dienstzustand des Benutzers die Netzwerkbeschleunigungs- und/oder Qualitätssicherungsrichtlinienanforderung an die Netzwerkdienststeuervorrichtung überträgt, wenn der Dienstzustand des Benutzers der normale Herunterladezustand ist, oder der Inhaltsbeschleunigungs-Herunterladezustand ist.

2. Verfahren nach Anspruch 1, wobei
eine Schnittstelle zwischen dem CDN-System und der Netzwerkdienststeuervorrichtung eingestellt wird, ein Protokoll der Schnittstelle eines der folgenden Protokolle übernimmt: ein Durchmesserprotokoll, ein COPS-Protokoll oder ein proprietäres Protokoll.

3. Verfahren nach Anspruch 2, ferner umfassend:
nachdem das Benutzerdienst-Herunterladen abgeschlossen ist, das CDN-System eine Netzwerkbeschleunigungs- und/oder Qualitätssicherungsrichtlinienaufhebungsanforderung des Benutzers an die Netzwerkdienststeuervorrichtung gemäß einer empfangenen Benutzerherunterlade-Abschlussnachricht überträgt;
beim Empfang der Netzwerkbeschleunigungs- und/oder
Qualitätssicherungsrichtlinienaufhebungsanforderung die Netzwerkdienststeuervorrichtung das Richtliniensteuersystem anfordert, die Netzwerkbeschleunigungs- und/oder Qualitätssicherungsrichtlinie des Benutzers aufzuheben; und
das Richtliniensteuersystem eine Netzwerkbeschleunigungs- und/oder Qualitätssicherungsrichtlinienaufhebungsanweisung an die Netzwerkdienststeuervorrichtung ausgibt.

4. Verfahren nach Anspruch 1, wobei ein Inhaltslieferungsnetzwerk-, (CND),system einen Dienstzustand eines Benutzers wartet, umfassend:
nachdem der Benutzer einen Beschleunigungs-Herunterladedienst ausgewählt hat, der Dienstzustand des Benutzers in einen Ein-Zustand eintritt;
nachdem eine Herunterladeverbindung erfolgreich hergestellt wurde, wenn sich der Benutzer im Ein-Zustand befindet, der Dienstzustand des Benutzers in einen normalen Herunterladezustand eintritt;
nachdem der Benutzer die Inhaltsbeschleunigung im normalen Herunterladezustand erfolgreich angefordert hat, der Dienstzustand des Benutzers in einen Inhaltsbeschleunigungs-Herunterladezustand eintritt; und
nachdem der Benutzer die Netzwerkbeschleunigung und/ oder Qualitätssicherung im Inhaltsbeschleunigungs-Herunterladezustand erfolgreich angefordert hat, der Dienstzustand des Benutzers in einen gemeinsamen Inhalts- und Netzwerkbeschleunigungs-Herunterladezustand eintritt.

5. Verfahren nach Anspruch 4, ferner umfassend:
nachdem der Benutzer Netzwerkbeschleunigung und/ oder Qualitätssicherung im normalen Herunterladezustand erfolgreich angefordert hat, der Dienstzustand des Benutzers in einen Netzwerkbeschleunigungs-Herunterladezustand eintritt; und
nachdem der Benutzer die Inhaltsbeschleunigung im Netzwerkbeschleunigungs-Herunterladezustand erfolgreich angefordert hat, der Dienstzustand des Benutzers in den gemeinsamen Inhalts- und Netzwerkbeschleunigungs-Herunterladezustand eintritt.

6. Verfahren nach Anspruch 4, ferner umfassend:
nachdem die Herunterladeverbindung nicht erfolgreich hergestellt wurde und eine begrenzte Anzahl von Malen überschritten wurde, wenn sich der Benutzer im Ein-Zustand befindet, der Dienstzustand des Benutzers in einen Aus-Zustand eintritt;
oder, nachdem das Herunterladen des Dienstes abgeschlossen ist oder eine Verbindung unterbrochen wird, wenn sich der Benutzer im normalen Herunterladezustand befindet, der Dienstzustand des Benutzers in den Aus-Zustand eintritt;
oder, nachdem die Verbindung unterbrochen oder das Herunterladen des Dienstes abgeschlossen ist und die Aufhebung einer relevanten Richtlinie abgeschlossen ist, wenn sich der Benutzer im Inhaltsbeschleunigungs-Herunterladezustand oder im Netzwerkbeschleunigung-Herunterladezustand befindet, der Dienstzustand des Benutzers in den Aus-Zustand eintritt;
oder, nachdem die Verbindung unterbrochen oder das Herunterladen des Dienstes abgeschlossen ist und eine Richtlinienaufhebungsabschluss-Rückmeldungsnachricht empfangen ist, wenn sich der Benutzer im gemeinsamen Inhalts- und Netzwerkbeschleunigungs-Herunterladezustand befindet, der Dienstzustand des Benutzers in den Aus-Status eintritt.

7. System zur Beschleunigung des Herunterladen eines Dienstes, umfassend ein Dienstzustand-Wartungsmodul und ein Dienstbeschleunigungs-Anforderungsmodul in einem Inhaltslieferungsnetzwerk-, CND,system und ein Richtlinienanwendungs- und Ausführungsmodul in einer Netzwerkdienst steuervorrichtung; wobei
das Dienstzustand-Wartungsmodul konfiguriert ist, um: einen Dienstzustand eines Benutzers zu warten;
das Dienstbeschleunigungs-Anforderungsmodul konfiguriert ist, um: eine Netzwerkbeschleunigungs- und/oder Qualitätssicherungsrichtlinienanforderung des Benutzers an die Netzwerkdienststeuervorrichtung gemäß einem Dienstzustand des Benutzers zu übertragen, der vom Dienstzustands-Wartungsmodul und der aktuellen Ressourcennutzung des Benutzers gewartet wird;
das Richtlinienanwendungs- und -ausführungsmodul konfiguriert ist, um: beim Empfang der Netzwerkbeschleunigungs- und/oder Qualitätssicherungsrichtlinienanforderung des Benutzers, auf ein Richtliniensteuersystem fuer ein entsprechendes Netzwerkbeschleunigungs- und/oder Qualitätssicherungsrichtlinie fuer den Benutzer anzuwenden, und eine Netzwerkbeschleunigungs- und/oder Qualitätssicherungsrichtlinie fuer den Benutzer auszuführen, die vom Richtliniensteuersystem ausgegeben wird; wobei
das Dienstzustand-Wartungsmodul konfiguriert ist, um: die folgenden Dienstzustaende des Benutzers zu warten: einen Ein-Zustand; einen normalen Herunterladezustand; einen Inhaltsbeschleunigungs-Herunterladezustand; einen Netzwerkbeschleunigung-Herunterladezustand; einen gemeinsamen Inhalts- und Netzwerkbeschleunigungs-Herunterladezustand; und einen Aus-Zustand;
das Dienstbeschleunigungs-Anforderungsmodul konfiguriert ist, um: die Netzwerkbeschleunigungs- und/oder Qualitätssicherungsrichtlinienanforderung an die Netzwerkdienststeuervorrichtung zu uebertragen, wenn der Dienstzustand des Benutzers der normale Herunterladezustand oder der Inhaltsbeschleunigungs-Herunterladezustand gemäß dem Dienstzustand des Benutzers ist, der vom Dienstzustand-Wartungsmodul gewartet wird.

8. System nach Anspruch 7, wobei
das Dienstbeschleunigungs-Anforderungsmodul konfiguriert ist, um die Netzwerkbeschleunigungs- und/oder Qualitätssicherungsrichtlinienanforderung an die Netzwerkdienststeuervorrichtung über eine Durchmesser-Protokollschnittstelle, eine COPS-Protokollschnittstelle, oder eine proprietäre Protokollschnittstelle zu uebertragen.

9. System nach Anspruch 7, wobei
das Dienstbeschleunigungsanforderungsmodul ferner konfiguriert ist, um: nachdem das Herunterladen des Benutzerdienstes abgeschlossen ist, eine Netzwerkbeschleunigungs- und/oder Qualitätssicherungsrichtlinienaufhebungsanforderung des Benutzers an die Netzwerkdienststeuervorrichtung gemäß einer empfangenen Benutzerherunterlade-Abschlussnachricht zu übertragen;
das Richtlinienanwendungs- und -ausführungsmodul ferner konfiguriert ist, um: beim Empfang der Netzwerkbeschleunigungs- und/oder Qualitätssicherungsrichtlinienaufhebungsanforderung, das Richtliniensteuersystem anzufordern, die Netzwerkbeschleunigungs- und/oder Qualitätssicherungsrichtlinie des Benutzers aufzuheben, und eine Netzwerkbeschleunigungs- und/oder Qualitätssicherungsrichtlinienaufhebungsanweisung auszuführen, die vom Richtsteuersystem ausgegeben wird.

10. System nach Anspruch 7, wobei das Dienstzustands-Wartungsmodul einen Dienstzustand eines Benutzers wartet, umfassend:
nachdem der Benutzer einen Beschleunigungs-Herunterladedienst ausgewählt hat, der Dienstzustand des Benutzers in einen Ein-Zustand eintritt;
nachdem eine Herunterladeverbindung erfolgreich hergestellt wurde, wenn sich der Benutzer im Ein-Zustand befindet, der Dienstzustand des Benutzers in einen normalen Herunterladezustand eintritt;
nachdem der Benutzer die Inhaltsbeschleunigung im normalen Herunterladezustand erfolgreich angefordert hat, der Dienstzustand des Benutzers in einen Inhaltsbeschleunigungs-Herunterladezustand eintritt; und
nachdem der Benutzer die Netzwerkbeschleunigung und/ oder Qualitätssicherung im Inhaltsbeschleunigungs-Herunterladezustand erfolgreich angefordert hat, der Dienstzustand des Benutzers in einen gemeinsamen Inhalts- und Netzwerkbeschleunigungs-Herunterladezustand eintritt.

11. System nach Anspruch 10, ferner umfassend:
nachdem der Benutzer Netzwerkbeschleunigung und/ oder Qualitätssicherung im normalen Herunterladezustand erfolgreich angefordert hat, der Dienstzustand des Benutzers in einen Netzwerkbeschleunigungs-Herunterladezustand eintritt; und
nachdem der Benutzer die Inhaltsbeschleunigung im Netzwerkbeschleunigungs-Herunterladezustand erfolgreich angefordert hat, der Dienstzustand des Benutzers in den gemeinsamen Inhalts- und Netzwerkbeschleunigungs-Herunterladezustand eintritt.

12. System nach Anspruch 10, ferner umfassend:
nachdem die Herunterladeverbindung nicht erfolgreich hergestellt wurde und eine begrenzte Anzahl von Malen überschritten wurde, wenn sich der Benutzer im Ein-Zustand befindet, der Dienstzustand des Benutzers in einen Aus-Zustand eintritt;
oder, nachdem das Herunterladen des Dienstes abgeschlossen ist oder eine Verbindung unterbrochen wird, wenn sich der Benutzer im normalen Herunterladezustand befindet, der Dienstzustand des Benutzers in den Aus-Zustand eintritt;
oder, nachdem die Verbindung unterbrochen oder das Herunterladen des Dienstes abgeschlossen ist und die Aufhebung einer relevanten Richtlinie abgeschlossen ist, wenn sich der Benutzer im Inhaltsbeschleunigungs-Herunterladezustand oder im Netzwerkbeschleunigungs-Herunterladezustand befindet, der Dienstzustand des Benutzers in den Aus-Zustand eintritt;
oder, nachdem die Verbindung unterbrochen oder das Herunterladen des Dienstes abgeschlossen ist und eine Richtlinienaufhebungsabschluss-Rückmeldungsnachricht empfangen ist, wenn sich der Benutzer im gemeinsamen Inhalts- und Netzwerkbeschleunigungs-Herunterladezustand befindet, der Dienstzustand des Benutzers in den Aus-Status eintritt.

## Revendications

1. Un procédé d'accélération de téléchargement de service, dans lequel,
un réseau de diffusion de contenu, RDC, un système transmettant une accélération de réseau et/ou une demande de politique d'assurance de qualité d'un utilisateur à un dispositif de commande de service de réseau selon un état de service entretenu de l'utilisateur et l'utilisation des ressources actuelle de l'utilisateur;
lors de la réception de l'accélération et/ou la demande de politique d'assurance de qualité de l'utilisateur, le dispositif de commande de service de réseau s'applique à un système de commande de politique pour une accélération de réseau et/ou une politique d'assurance de qualité correspondante; et
le système de commande de politique émettant l'accélération de réseau et/ou la politique d'assurance de qualité pour l'utilisateur au dispositif de commande de service de réseau; où,
le système RDC entretient les états de service suivants de l'utilisateur;
un état activé; un état de téléchargement normal; un état de téléchargement d'accélération de contenu; un état de téléchargement d'accélération de réseau; un état de téléchargement d'accélération conjointe de contenu et de réseau; et un état désactivé; où,
le système RDC, selon l'état de service entretenu de l'utilisateur, transmet l'accélération de réseau et/ou la demande de politique d'assurance de qualité au dispositif de commande de service de réseau quand l'état de service de l'utilisateur est l'état de téléchargement normal, ou est l'état de téléchargement d'accélération de contenu.

2. Le procédé selon la revendication 1, dans lequel,
une interface est définie entre le système RDC et le dispositif de commande de service de réseau, un protocole de l'interface adopte l'un des protocoles suivants: un protocole Diameter, un protocole COPS ou un protocole propriétaire.

3. Le procédé selon la revendication 2, comprenant en outre:
une fois le téléchargement de service de l'utilisateur terminé, le système RDC transmet une accélération de réseau et/ou une demande d'annulation de politique d'assurance de qualité de l'utilisateur au dispositif de commande de service de réseau selon un message de fin de téléchargement de l'utilisateur reçu;
quand la réception de l'accélération de réseau et/ou une demande d'annulation de politique d'assurance de qualité,
le dispositif de commande de service de réseau demande au système de commande de politique d'annuler l'accélération de réseau et/ou la politique d'assurance qualité de l'utilisateur; et
le système de commande de politique émettant une d'accélération de réseau et/ou une instruction d'annulation de politique d'assurance de qualité au dispositif de commande de service de réseau.

4. Le procédé selon la revendication 1, dans lequel, un réseau de diffusion de contenu (RDC) entretient un état de service d'un utilisateur, comprenant:
après que l'utilisateur a sélectionné un service de téléchargement d'accélération, l'état de service de l'utilisateur entre dans un état activé;
après qu'un lien de téléchargement est établi avec succès quand l'utilisateur est dans l'état activé, l'état de service de l'utilisateur entre dans un état de téléchargement normal;
après que l'utilisateur a demandé l'accélération de contenu avec succès dans l'état de téléchargement normal, l'état de service de l'utilisateur entre dans un état de téléchargement d'accélération de contenu; et
après que l'utilisateur a demandé une accélération du réseau et/ou une assurance de qualité avec succès dans l'état de téléchargement d'accélération de contenu, l'état de service de l'utilisateur entre dans un état de téléchargement d'accélération conjointe de contenu et de réseau.

5. Le procédé selon la revendication 4, comprenant en outre:
après que l'utilisateur a demandé l'accélération de réseau et/ou l'assurance de qualité avec succès dans l'état de téléchargement normal, l'état de service de l'utilisateur entre dans un état de téléchargement d'accélération de réseau; et
après que l'utilisateur a demandé l'accélération de contenu avec succès dans l'état de téléchargement d'accélération de réseau, l'état de service de l'utilisateur entre dans l'état de téléchargement de l'accélération conjointe de contenu et de réseau.

6. Le procédé selon la revendication 4, comprenant en outre:
après que le lien de téléchargement est établi sans succès et après qu'un nombre limité de fois est dépassé quand l'utilisateur est dans l'état activé, l'état de service de l'utilisateur entre dans un état désactivé;
ou, après que le téléchargement de service est terminé ou un lien est interrompu quand l'utilisateur est dans l'état de téléchargement normal, l'état de service de l'utilisateur entre dans l'état désactivé;
ou, après que le lien est interrompu ou le téléchargement du service est terminé et l'annulation d'une politique pertinente est terminée quand l'utilisateur est dans l'état de téléchargement d'accélération de contenu ou dans l'état de téléchargement d'accélération de réseau, l'état de service de l'utilisateur entre dans l'état désactivé;
ou, après que le lien est interrompu ou après que le téléchargement du service est terminé et après qu'un message de retours d'information de fin d'annulation de politique est reçu quand l'utilisateur est dans l'état de téléchargement d'accélération conjointe de contenu et de réseau, l'état de service de l'utilisateur entre dans l'état désactivé.

7. Un système d'accélération de téléchargement de service, comprenant un module de maintenance d'état de service et un module de demande d'accélération de service dans un réseau de diffusion de contenu, RDC, un système, et un module d'application et d'exécution de politique dans un dispositif de commande de service de réseau; où,
le module de maintenance d'état de service est configuré pour: entretenir un état de service d'un utilisateur;
le module de demande d'accélération de service est configuré pour: transmettre une accélération de réseau et/ou une demande de politique d'assurance de qualité de l'utilisateur au dispositif de commande de service de réseau selon un état de service de l'utilisateur entretenu par le module de maintenance d'état de service et l'utilisation des ressources actuelles du utilisateur;
le module d'application et d'exécution de politique est configuré pour: quand la réception de l'accélération de réseau et/ou la demande de politique d'assurance de qualité de l'utilisateur, appliquer à un système de commande de politique pour une accélération de réseau et/ou une politique d'assurance de qualité correspondante, et exécuter l'accélération de réseau et/ou la politique d'assurance de qualité pour l'utilisateur émise par le système de commande de politique; où,
le module de maintenance d'état de service est configuré pour: entretenir les états de service suivants de l'utilisateur: un état activé; un état de téléchargement normal ; un état de téléchargement d'accélération de contenu ; un état de téléchargement d'accélération de réseau; un état de téléchargement d'accélération conjointe de contenu et de réseau; et un état désactivé;
le module de demande d'accélération de service est configuré pour: transmettre l'accélération de réseau et/ou une demande de politique d'assurance de qualité au dispositif de commande de service de réseau quand l'état de service de l'utilisateur est l'état de téléchargement normal ou est l'état de téléchargement d'accélération de contenu, selon l'état de service de l'utilisateur entretenu par le module de maintenance d'état de service.

8. Le système selon la revendication 7, dans lequel,
le module de demande d'accélération de service est configuré pour: transmettre l'accélération de réseau et/ou la demande de politique d'assurance de qualité au dispositif de commande de service de réseau par l'intermédiaire d'une interface de protocole Diameter, une interface de protocole COPS, ou une interface de protocole propriétaire.

9. Le système selon la revendication 7, dans lequel,
le module de demande d'accélération de service est en outre configuré pour: après que le téléchargement de service de l'utilisateur est terminé, transmettre une accélération de réseau et/ou une demande d'annulation de politique d'assurance de qualité de l'utilisateur au dispositif de commande de service de réseau selon un message de fin de téléchargement de l'utilisateur reçu;
le module d'application et d'exécution de politique est en outre configuré pour: quand la réception de l'accélération de réseau et/ou la demande d'annulation de politique d'assurance de qualité, demander au système de commande de politique d'annuler l'accélération de réseau et/ou l'assurance de qualité de l'utilisateur, et exécuter une accélération de réseau et/ou une instruction d'annulation de politique d'assurance de qualité émise par le système de commande de politique.

10. Le système selon la revendication 7, dans lequel, le module de maintenance d'état de service entretient un état de service d'un utilisateur, comprenant;
après que l'utilisateur a sélectionné un service de téléchargement d'accélération, l'état de service de l'utilisateur entre dans un état activé;
après qu'un lien de téléchargement est établi avec succès quand l'utilisateur est dans l'état activé, l'état de service de l'utilisateur entre dans un état de téléchargement normal;
après que l'utilisateur a demandé l'accélération de contenu avec succès dans l'état de téléchargement normal, l'état de service de l'utilisateur entre dans un état de téléchargement d'accélération de contenu; et
après que l'utilisateur a demandé l'accélération du réseau et/ou l'assurance de qualité avec succès dans l'état de téléchargement d'accélération de contenu, l'état de service de l'utilisateur entre dans un état de téléchargement d'accélération conjointe de contenu et de réseau.

11. Le système selon la revendication 10, comprenant en outre;
après que l'utilisateur a demandé l'accélération du réseau et/ou l'assurance de qualité avec succès dans l'état de téléchargement normal, l'état de service de l'utilisateur entre dans un état de téléchargement de l'accélération de réseau; et
après que l'utilisateur a demandé l'accélération du contenu avec succès dans l'état de téléchargement d'accélération de réseau, l'état de service de l'utilisateur entre dans l'état de téléchargement de l'accélération conjointe de contenu et du réseau.

12. Le système selon la revendication 10, comprenant en outre:
après que le lien de téléchargement est établi sans succès et après qu'un nombre limité de fois est dépassé quand l'utilisateur est dans l'état activé, l'état de service de l'utilisateur entre dans un état désactivé;
ou, après que le téléchargement de service est terminé ou un lien interrompu quand l'utilisateur est dans l'état de téléchargement normal, l'état de service de l'utilisateur entre dans l'état désactivé;
ou, après que le lien est interrompu ou le téléchargement du service est terminé et l'annulation d'une politique pertinente est terminée quand l'utilisateur est dans l'état de téléchargement d'accélération de contenu ou est dans l'état de téléchargement d'accélération réseau, l'état de service de l'utilisateur entre dans l'état désactivé;
ou, après que le lien est interrompu ou après que le téléchargement de service est terminé et après qu'un message du retour d'information de fin d'annulation de la politique est reçu quand l'utilisateur est dans l'état de téléchargement d'accélération conjointe du contenu et du réseau, l'état de service de l'utilisateur entre dans l'état désactivé.
